# EUROPÄISCHE PATENTSCHRIFT

(11) **EP 1 427 555 B1**
(45) Veröffentlichungstag und Bekanntmachung des Hinweises auf die Patenterteilung: **17.05.2006**
(21) Anmeldenummer: 02798718.9
(22) Anmeldetag: 13.09.2002
(51) Int. Cl.: B22D 11/06, F16C 13/00

(54) **GIESSROLLE FÜR EINE ZWEIROLLEN-STRANGGIESSMASCHINE**
CASTING ROLLER FOR A DOUBLE-ROLLER CONTINUOUS CASTING MACHINE
ROULEAU DE COULEE POUR MACHINE DE COULEE CONTINUE A DOUBLE ROULEAU

(30) Priorität: 18.09.2001 CH 17152001; 12.04.2002 CH 6152002
(43) Veröffentlichungstag der Anmeldung: 16.06.2004
(73) Patentinhaber: SMS Demag Aktiengesellschaft, 40237 Düsseldorf (DE); Main Management Inspiration AG, 6052 Hergiswil/NW (CH)
(72) Erfinder: Marti, Heinrich, CH-8127 Forch (CH); Barbé, Jacques, F-42660 Tarantaise (FR); Steiner, Benno, CH-6003 Luzern (CH); Streubel, Hans, 40699 Erkrath (DE)
(74) Vertreter: Luchs, Willi
(86) Internationale Anmeldenummer: PCT/EP2002/010277
(87) Internationale Veröffentlichungsnummer: WO 2003/024645

(56) Entgegenhaltungen:
- EP-A- 0 429 385
- DE-A- 3 839 110
- DE-A- 10 059 304
- FR-A- 2 758 282
- GB-A- 2 327 900
- US-A- 3 543 366
- US-A- 3 706 119
- US-A- 4 793 250

## Beschreibung

Die Erfindung betrifft eine Giessrolle für eine Zweirollen-Giessmaschine, insbesondere zum Giessen eines Stahlbandes, mit einem Zylindermantel, der auf einer Achse drehbar ist, wobei Andrückmittel zum Aufweiten des Zylindermantels vorgesehen sind.

Giessmaschinen dieser Art arbeiten in der Weise, dass im Betrieb die im Kokillenraum befindliche Schmelze durch den Giessspalt zwischen den sich gegenläufig drehenden Giessrollen fliesst und hierbei zu einem Metallband ausgeformt wird.

Die Giessmäntel erfahren dabei aufgrund der thermischen Belastung eine konvexe Verformung, welche ein konkaves Profil des gegossenen Bandes zur Folge hat. Daraus kann eine Qualitätsminderung des Bandes resultieren, zumal die Abkühlung des Bandes auch eine Querschrumpfung des Bandes verursacht. Aus diesem Grund werden die Giessrollen in kaltem Zustand konkav gestaltet, so dass bei thermischer Ausdehnung der Giessrollen eine parallele oder leicht konvexe Form des Bandes erzielt wird, die bei Abkühlung des Bandes eine unkritische Querschrumpfung erlaubt und dessen Masshaltigkeit gewährleistet.

Es ist jedoch bei derartigen Giessrollen von Nachteil, dass sie durch ihre konkave Formgebung nur für einen bestimmten Schmelzenzufluss und somit des Wärmeintrags in die Giessrollen einsetzbar sind. Ändert man die Produktionsparameter und somit auch den Schmelzenzufluss in die Kokille, ergibt sich ein anderer Wärmeeintrag und dadurch eine andere thermische Verformung der Giessrollen, die dazu führen kann, dass das gegossene Band nicht mehr masshaltig ist. Dies kann zur Folge haben, dass für verschiedene Produktionsparameter unterschiedliche Geometrien der Giessrollen nötig werden.

Ein weiterer Nachteil bei konkaven Giessrollen besteht beim Anfahren der Giessmaschine ohne Kaltstrang. Da man in diesem Fall den Giessspalt beim Zusammenfahren der Giessrollen nicht gänzlich schliessen kann, tritt dann Flüssigstahl nach unten aus, wodurch ein kontrolliertes Anfahren erschwert wird.

Das Dokument DE-A-38 39 110, welches als nächstliegender Stand der Technik angesehen wird, offenbart eine Gießrolle für eine Zweirollen-Giessmaschine zum Giessen von Stahlband. Der Zylindermantel der Giessrolle ist auf einer Achse drehbar. Es sind Andrückmittel zum Aufweiten des Zylindermantels vorgesehen. Als nachteilig wird bei dieser Konstruktion empfunden, dass die Aufweitung des Zylindermantels über dessen Länge nicht variiert werden kann und an den Enden des Mantels nicht wirksam ist.

Der Erfindung liegt die Aufgabe zugrunde, diese Nachteile zu vermeiden und eine Giessrolle der eingangs genannten Art zu schaffen, deren Aussenkontur ganzheitlich oder lokal mit konstruktiv einfachen sowie leicht und feinfühlig steuerbaren Mitteln einstellbar ist.

Diese Aufgabe wird erfindungsgemäss dadurch gelöst, dass zwischen dem Zylindermantel und der Achse mehrere Andrückmitteln zum Aufweiten des Zylindermantels angeordnet sind, welche zwischen dem Zylindermantel und der Achse angeordnete Zwischenringe aufweisen, die mit Lagerungen für das Drehen des Zylindermantels auf der feststehend angeordneten Achse versehen sind, und dass wenigstens ein Tragring vorgesehen ist, der sowohl eine radiale als auch eine axiale Lagerung des Zylindermantels auf der feststehenden Achse ermöglicht und durch diesen die Kühlwasserzufuhr zum Zylindermantel enthalten ist.

Durch entsprechende Positionierung des bzw. der Zwischenringe entlang der Achse sowie durch die entsprechende Beaufschlagung der Druckkammern ist so jederzeit möglich, das Profil des Giessmantels und somit das Profil des Bandes während des Giessprozesses feinfühlig einzustellen. Es besteht somit die Möglichkeit, Änderungen der Prozessgrössen ohne Produktionsunterbrechungen zu kompensieren. Auch das Anfahren mit oder ohne Kaltstrang wird erheblich vereinfacht, da es nunmehr möglich ist, die herkömmlich konkave Form der Giessrolle in eine zylindrische Form zu bringen, welche die vollständige Schliessung des Giessspaltes beim Zusammenfahren der Giessrollen gewährleistet. Dadurch ist ein kontrolliertes Anfahren möglich, weil Flüssigstahl nicht nach unten ausfliessen kann.

In Ausgestaltung der Erfindung ist vorgesehen, dass die Andrückmittel eine an der Innenwand des Zylindermantels angrenzende Druckkammer aufweisen, welche über Zuführungskanäle in der Achse und im Zwischenring mit einem fluiden Druckmedium beaufschlagbar ist, so dass eine radiale oder eine schräg auf den Zylindermantel wirkende Beaufschlagung durch diese Andrückmittel erfolgt. Durch Beaufschlagung der Druckkammer mit dem fluiden Druckmedium wird auf den Zylindermantel eine radiale Druckkraft gleichmässig ausgeübt. Dadurch wird der Zylindermantel aufgeweitet.

Um eine gleichmässige Beaufschlagung des Zylindermantels zu erzielen, sieht die Erfindung vor, dass die Druckkammer ringförmig ist und den Zwischenring vollumfänglich umfasst.

Zweckmässigerweise liegt der Zwischenring stirnseitig gegen die Innenwand des Zylindermantels an und weist einen die Druckkammer bildenden Hohlraum auf, der stirnseitig durch eine im Hohlraum gegen die Innenwand des Zylindermantels anliegend angeordnete, flexible Dichtung begrenzt ist.

Bei einer anderen Ausführung nach der Erfindung ist zwischen dem Zwischenring und der Innenwand des Zylindermantels ein umfänglicher Zwischenspalt vorhanden, der durch eine die Druckkammer begrenzende Metalldichtung überbrückt ist.

Bei einer weiteren Variante der Erfindung liegt der Zwischenring gegen die Innenwand des Zylindermantels an und weist einen die Druckkammer bildenden Hohlraum auf, der stirnseitig von der Innenwand des Zylindermantels begrenzt ist und von einer oder mehreren im Zylindermantel eingebauten Aussendichtungen umschlossen ist.

Zweckmässigerweise ist der Zwischenring auf der stehenden Achse drehbar positioniert und mit einer oder mehreren den Übergang zwischen den Zuführungskanälen in der Achse und im Zwischenring abdichtenden Dichtungen versehen.

Bei einer alternativen Variante der erfindungsgemässen Andrückmittel sieht die Erfindung vor, dass diese einen an der Innenwand des Zylindermantels fest montierten, mitdrehenden Andrückring aufweisen, welcher am Zwischenring umfänglich anliegt und in radialer Richtung durch induktives Aufheizen ausdehnbar ist. Durch Aufheizen des Andrückringes wird dieser mehr oder weniger ausgedehnt, und infolgedessen wird der Zylindermantel aufgeweitet. Auf diese Weise ist es auch hier jederzeit möglich, das Giessrollenprofil und somit auch das Bandprofil während des Giessprozesses einzustellen.

Zweckmässigerweise ist der Andrückring mit einer thermischen Isolierung versehen.

Bei Giessrollen mit mehreren Zwischenringen ist es von Vorteil, wenn diese entlang der stehenden Achse verstellbar sind.

Es ist ebenfalls von Vorteil, wenn die Kontaktflächen zwischen den Zwischenringen und der Innenwand des Zylindermantels auf einer gemeinsamen Fläche liegen.

Die Erfindung wird nachfolgend anhand mehrerer Ausführungsbeispiele unter Bezugnahme auf die Zeichnung näher erläutert.
Es zeigen:
- Fig. 1: eine erfindungsgemässe Giessrolle mit mehreren Zwischenringen, deren Andrückmittel mit einem fluiden Druckmedium beaufschlagt sind,
- Fig. 2: die Giessrolle aus Fig. 1, deren Zwischenringe mit Varianten der Andrückmittel gemäss Fig. 1 versehen sind,
- Fig. 3: eine Variante der Giessrolle nach den Figuren 1 und 2, deren Zwischenringe ausserhalb einer zentralen Zentrierung und Wasserzufuhr angeordnet sind,
- Fig. 4 bis 6: die Andrückmittel der Giessrollen nach den Figuren 1 und 2, vergrössert dargestellt, und
- Fig. 7: die Andrückmittel der Giessrolle nach Fig. 3, ebenfalls vergrössert dargestellt,
- Fig. 8: einen Teilschnitt bei der einen Lagerung des Zylindermantels, bei der ebenfalls ein Andrückmittel vorhanden ist.
- Fig. 9: eine Giessrolle im Querschnitt mit einer Variante eines Andrückmittels,
- Fig. 10: einen teilweisen Schnitt durch das Andrückmittel nach Fig. 9,
- Fig. 11: eine Draufsicht auf einen Teil von Segmenten des Andrückmittels nach Fig. 9,
- Fig. 12: eine Giessrolle im Querschnitt mit einer weiteren Variante eines Andrückmittels,
- Fig. 13: einen teilweisen Schnitt durch das Andrückmittel nach Fig. 12,
- Fig. 14: eine vergrösserte Ansicht der Spanneinrichtung in Pfeilrichtung XIV gemäss Fig. 13.

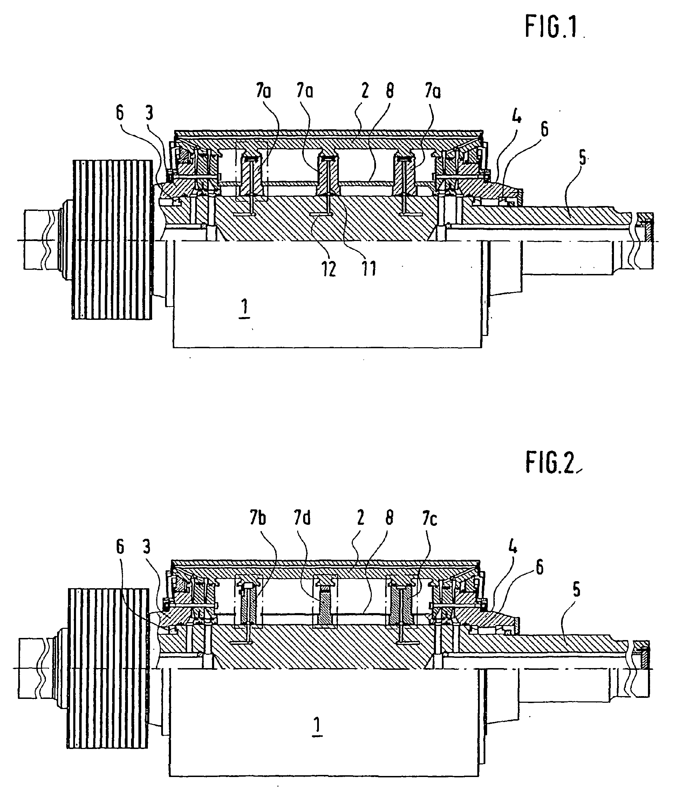

Die Giessrolle 1 nach Fig. 1 weist einen Zylindermantel 2 mit stirnseitigen Tragringen 3 und 4 auf, die zusammen mit dem Zylindermantel 2 auf einer stehenden Achse 5 mit Lagern 6 drehbar sind. Im Innenraum der Giessrolle 1 sind drei Zwischenringe 7a angeordnet, mit denen das Aussenprofil der Giessrolle 1 einstellbar ist. Die Zwischenringe 7a sind auf der stehenden Achse 5 mit Abstandshaltern 8 positioniert, die an den Tragringen 3 und 4 befestigt sind.

Die Zwischenringe 7a sind mit dem Zylindermantel 2 mitdrehbar. Die Mitnahme erfolgt durch die Abstandshalter 8 und die Tragringe 3 und 4.

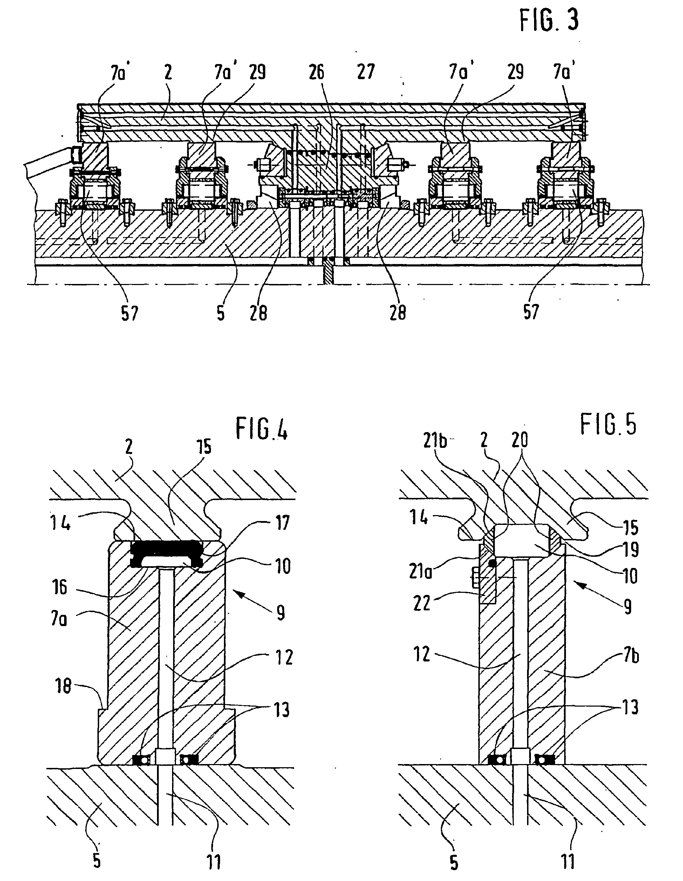

Wie aus Fig. 4 ersichtlich, sind die Zwischenringe 7a mit Andrückmitteln 9 mit einer Druckkammer 10 versehen. Diese ist ringförmig ausgebildet und umfasst den Zwischenring 7a vollumfänglich. Sie ist über Zuführungskanäle 11, 12 in der Achse 5 und im Zwischenring 7a mit einem fluiden Druckmedium, wie Hydrauliköl und dergleichen beaufschlagbar. Zum Aufbringen der erforderlichen Andrückkräfte sind hochviskose Druckmedien verwendbar. Der Übergang zwischen den Zuführungskanälen 11 und 12 ist mit im Zwischenring 7a eingebauten Dichtungselementen 13 abgedichtet. Die Zwischenringe 7a liegen stirnseitig gegen die Innenwand 14 eines ringförmigen Ansatzes 15 des Zylindermantels 2 an und weisen eine die Druckkammer 10 bildende Ringnut 16 auf, die stirnseitig durch eine in der Ringnut 16 eingelegte, flexible Dichtung 17 begrenzt ist. Die Zwischenringe 7a weisen ausserdem einen als Positionierungshilfe dienenden Ansatz 18 auf, der mit den Abstandshaltern 8 zusammenwirkt.

Die Giessrolle nach Fig. 2 unterscheidet sich von der Giessrolle nach Fig. 1 im wesentlichen dadurch, dass ihre Zwischenringe 7b, 7c und 7d abweichend von den Zwischenringen 7a ausgeführt sind.

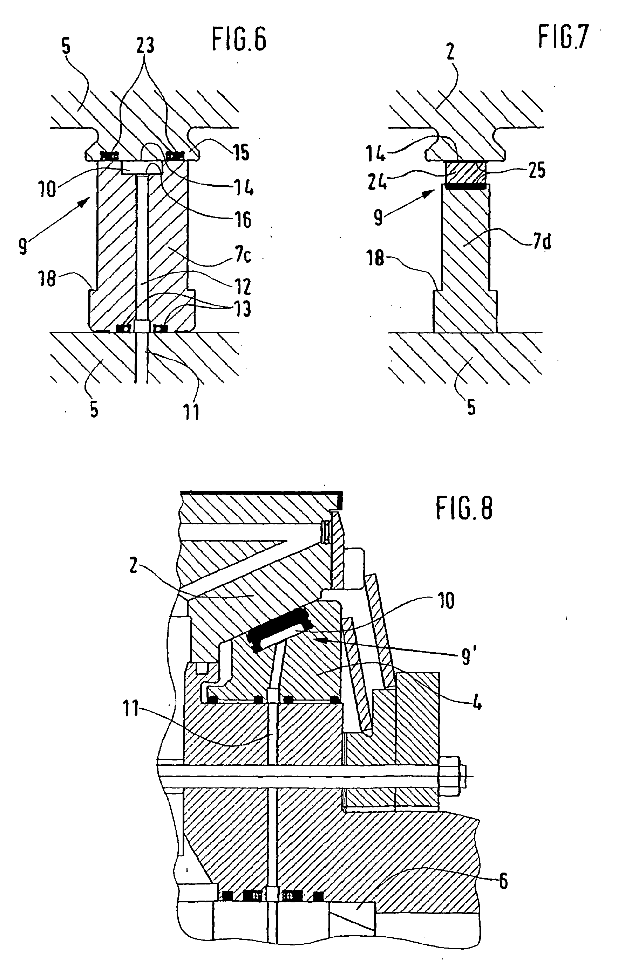

Gemäss Fig. 5 ist beim Zwischenring 7b zwischen ihm und der Innenwand 14 des Zylindermantels 2 ein umfänglicher Zwischenspalt 19 vorhanden, der durch eine die Druckkammer 10 begrenzende Metalldichtung 20 überbrückt ist. Diese ist in Ringnuten 21a, 21b des Zwischenringes 7b bzw. des Zylindermantels 2 eingelegt. Sie wird dort durch einen Ringflansch 22 festgehalten, der seitlich am Zwischenring 7b befestigt ist. Durch die Metalldichtung 20 wird auch der Zwischenring 7b relativ zum Zylindermantel 2 positioniert, so dass der sonst beim Zwischenring 7a vorhandene Absatz 18 entfallen kann.

Der Zwischenring 7c nach Fig. 6 unterscheidet sich vom Zwischenring 7a lediglich dadurch, dass bei ihm die flexible Dichtung 17 fehlt, und dass die Druckkammer 10 stirnseitig von der Innenwand 14 des Zylindermantels 2 begrenzt sowie von im Zylindermantel 2 eingebauten Dichtungen 23 umschlossen ist. Bei den Zwischenringen 7a und 7c ist die Ringnut 16 mit einem rechteckigen Querschnitt ausgebildet. Es ist aber ohne weiteres im Rahmen der Erfindung möglich, die Ringnut 16 im Querschnitt halbringförmig auszubilden. Es ist auch ohne weiteres möglich, statt einer vollumfänglichen Ringnut mehrere auf dem Umfang verteilt angeordnete Teilringnuten vorzusehen.

Der Zwischenring 7d nach Fig. 7 unterscheidet sich von den Zwischenringen 7a, 7b und 7c dadurch, dass er stationär auf der stehenden Achse ist und nicht mitdreht. An der Innenwand 14 des Zylindermantels 2 ist ein fest montierter, mitdrehender Andrückring 24 vorgesehen, der in radialer Richtung durch induktives Aufheizen ausdehnbar ist. Der Andrückring 24 ersetzt hier die das Druckmedium beaufschlagbare Druckkammer 10 der Zwischenringe 7a, 7b und 7c. Dadurch wird der Zylindermantel 2 aufgeweitet. Um diese Wirkung noch zu verstärken, ist der Andrückring 24 mit einer Isolierung 25 versehen, die ihn gegen den Zylindermantel 2 und den Zwischenring 7d thermisch isoliert. Der Andrückring 24 kann von der stehenden Achse 5 aus nicht nur induktiv, sondern auch über die Strahlungswärme aufgeheizt werden, dann entfällt jedoch die Isolierung zwischen dem Andrückring und dem Zwischenring.

Die Giessrolle nach Fig. 3 unterscheidet sich von den Giessrollen nach den Figuren 1 und 2 dadurch, dass bei ihr die Zwischenringe 7a' nicht direkt auf der stehenden Achse 5 sitzen, sondern auf einem koaxialen Tragzylinder 26 gelagert sind, der mittels Klemmringen 27 mittig mit dem Zylindermantel 2 drehfest verbunden ist und auf der stehenden Achse 5 zusammen mit dem Zylindermantel 2 und den Zwischenringen 7a' drehbar ist. Auf der Achse 5 sind Lager 28 für den Tragzylinder 26 vorgesehen. Zur Positionierung der Zwischenringe 7a' ist die Innenwand 14 des Zylindermantels 2 mit Absätzen 29 versehen, und die Zwischenringe 7a' sind auf Anschlag gegen die Absätze 29 eingebaut. Dadurch bedingt, haben die Zwischenringe 7a', von der Mitte ausgehend, unterschiedliche Durchmesser. Durch die mittige Anordnung des Tragzylinders 26 zum Zylindermantel entsteht der weitere Vorteil, dass bei einer möglichen Keilform des erzeugenden Bandes ein Ausgleich geschaffen werden kann, indem der Giessspalt je nach Bedarf auf der einen Seite verkleinert bzw. vergrössert wird.

Im Unterschied dazu haben bei der Giessrolle nach Fig. 1 die Zwischenringe 7a den gleichen Durchmesser, so dass deren Kontaktflächen mit der Innenwand 14 des Zylindermantels 2 auf einer gemeinsamen Fläche liegen.

Die erfindungsgemässen Giessrollen nach den Figuren 1, 2 und 3 bieten individuelle, mehrfache Einsatz- und Positioniermöglichkeiten für die Zwischenringe 7a, 7a', 7b, 7c und 7d zur Profileinstellung des Zylindermantels 2 in Achsrichtung der Giessrolle.

Die Zwischenringe 7a, 7a', 7b, 7c und 7d erzeugen vernachlässigbare Abstützkräfte auf der stehenden Achse der Giessrolle. Die Relativbewegung zwischen dem sich drehenden Zylindermantel 2 und der stehenden Achse 5 erfolgt mit extrem geringen Dichtreibkräften.

Die erfindungsgemässe Giessrolle zeichnet sich zudem dadurch aus, dass sie eine einfache Montage bzw. Demontage, insbesondere des Zylindermantels 2 gewährleistet.

Sie zeichnet sich auch durch einen geringen Bauraum aus, im Hinblick auf andere im Inneren des Zylindermantels 2 einzubauende Elemente, wie Vibratoren, magnetische Elemente oder dergleichen.

Bei der erfindungsgemässen Giessrolle wird ausserdem berücksichtigt, dass wegen der unterschiedlichen Formsteifigkeit des Zylindermantels 2 und der Zwischenringe 7a, 7a', 7b, 7c und 7d letztere eine geringere Deformation als der Zylindermantel 2 erfahren. Dies kann man durch entsprechende Materialauswahl dieser Teile beinflussen.

Bei der Aufweitung des Zylindermantels 2 mit Hilfe der Zwischenringe 7a, 7a', 7b, 7c und 7d wird selbstverständlich die thermische Ausdehnung des Zylindermantels 2 mitberücksichtigt.

Fig. 8 zeigt noch eine vergrösserte Schnittdarstellung der endseitigen Lagerung des Zylindermantels 2 eines Tragringes 4, welcher im Rahmen der Erfindung ebenfalls als Zwischenring ausgebildet ist. Zu diesem Zwecke ist bei einem jeweiligen Tragring 4 ein auf den Zylindermantel 2 wirkendes Andrückmittel 9' vorgesehen. Vorteilhaft ist dieses Andrückmittel 9' in einem Winkel, beispielsweise von annähernd 30°, zur Horizontalen gegen den Zylindermantel hin angeordnet, so dass es nicht radial, sondern eben in dem entsprechenden Winkel auf den Mantel 2 wirkt. Die Andrückmittel 9' weisen eine Druckkammer 10 auf, die wiederum über Zuführungskanäle 11 mit einer Druckmittelquelle verbunden sind.

Die Oberfläche des Zylindermantels kann durch ein Pulsieren des Druckmediums in wenigstens einem Zwischenring oder durch einen auf mindestens einem Zwischenring vorgesehenen Vibrator in Schwingungen gebracht werden, so dass die Wärmeabfuhr beeinflusst bzw. erhöht werden kann.

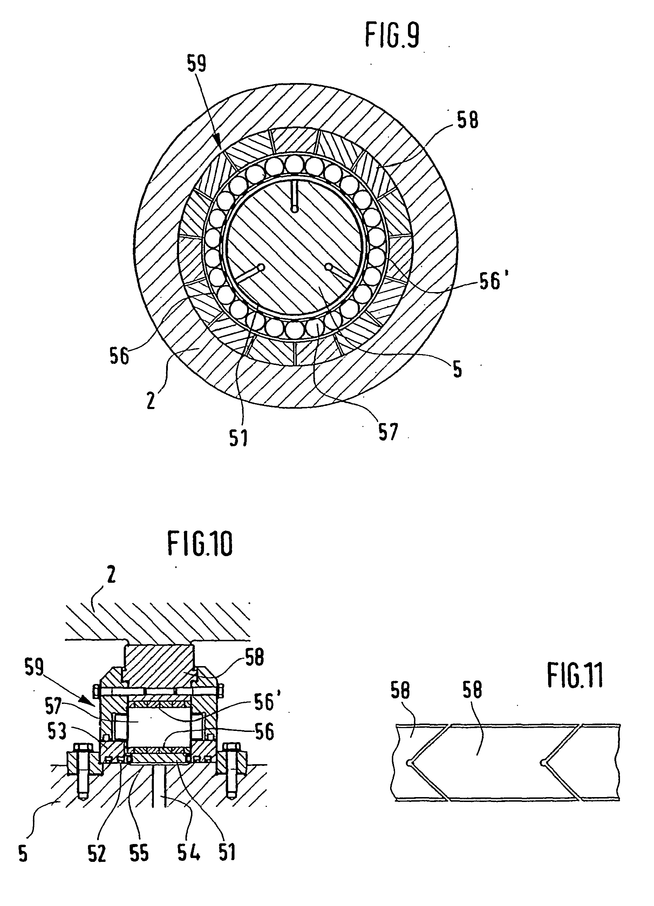

Fig.9 und Fig.10 zeigen eine Variante eines Andrückmittels 59, durch den der Zylindermantel 2 aufgeweitet werden kann. Vorzugsweise sind analog wie beim Ausführungsbeispiel nach Fig.1 mehrere solcher Andrückmittel 59 entlang des Zylindermantels 2 angeordnet, die es ermöglichen, dass dieser Mantel 2 wenigstens über einen Teilbereich seiner Gesamtlänge gleichmässig aufgeweitet werden kann.

Das Andrückmittel 59 hat einen Spreizring 51, zwischen dem und der Achse eine an eine Druckmittelversorgung 54 angeschlossene Druckkammer 55 gebildet ist, die seitlich von entsprechenden Dichtmitteln 52, 53 abgedichtet ist. Der Spreizring 51 ist von einer Spiralbuchse 56 umgeben, die einen wendelförmigen Aufbau mit einer Achse koaxial zur derjenigen der Achse 5 hat und sich bei einer Aufweitung entsprechend ausdehnt. Diese Spiralbuchse 56 bildet den Innenring eines eingekapselten Rollenlagers 57, welches aussenseitig ebenfalls von einer solchen Spiralbuchse 56' gebildet ist. Zwischen letzterer und dem Zylindermantel 2 sind noch einen Ring bildende Segmente 58 vorhanden, die mit ihrem Aussenmantel an der Innenseite des Mantels 2 anliegen.

Der vom Druckmittel, bspw. einem Drucköl, radial aufgeweitete Spreizring 51 dehnt die innere Spiralbuchse 56, die ihrerseits via die Rollen die äussere Spiralbuchse 56' dehnt und diese über den Ring 58 den Zylindermantel 2 aufweitet. Mit diesem Andrückmittel 59 ergibt sich der Vorteil, dass bei dem mit einem Druckmittel beaufschlagten Spreizring 51 und der diesen umfassenden Spiralbuchse 56 keine drehenden Teile vorhanden sind, so dass eine betriebssichere Abdichtung möglich ist.

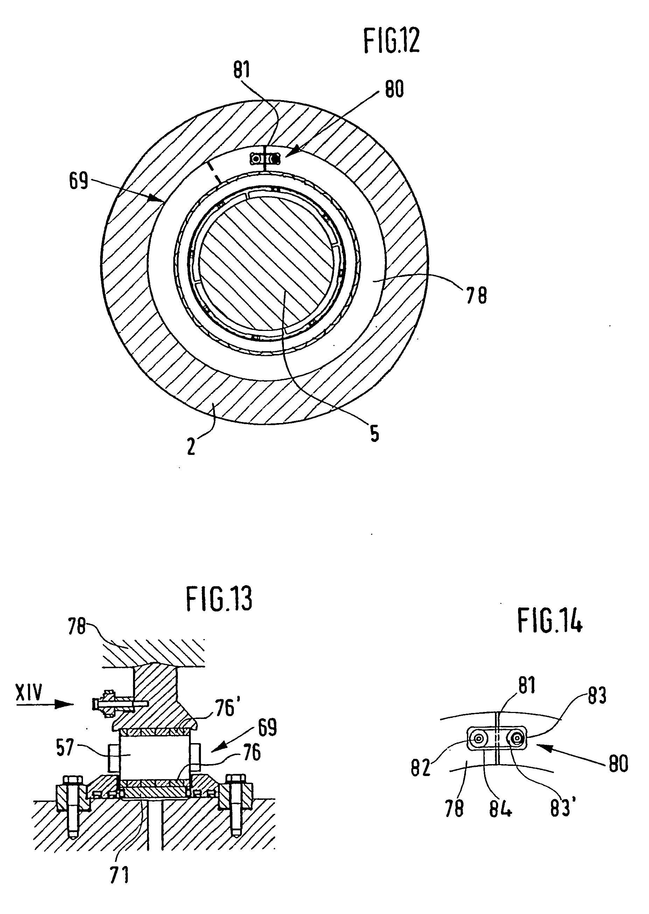

Fig.11 zeigt noch eine Draufsicht auf einen Teil des aus Segmenten 58 bestehenden Ringes. Diese Segmente 58 greifen durch entsprechende Spitzen und deckungsgleiche Ausnehmungen ineinander.

Bei einer weiteren Variante gemäss Fig.12, Fig.13 und Fig.14 ist ein ähnliches wie dasjenige nach Fig. 9 und 10 aufgebautes Andrückmittel 69 veranschaulicht, bei dem ebenfalls ein die Achse 5 umgebender Spreizring 71, ein Rollenlager 57 mit Spiralbuchsen 76, 76' als Innen- bzw. Aussenring und ein Ring 78 vorgesehen sind.

Der Ring 78 ist gemäss Fig.13 durch einen Schlitz 81 getrennt. Mittels einer Spanneinrichtung 80 kann dieser Ring 78 und mit ihm die inneren Spiralbuchsen für die Montage mehr oder weniger zusammengedrückt und damit im Durchmesser verändert werden. Zu diesem Zweck besteht die Spanneinrichtung 80 aus beidseitig zum Schlitz am Ring 78 befestigter Bolzen 82, 83, die von einem biegbaren Ringelement 84 umschlungen sind. Der eine Bolzen 83 weist einen Exzenter 83' auf. Durch Drehen dieses Exzenters 83' kann der Ring 78 zusammengedrückt bzw. gelockert werden.

Für unterschiedliche Rollendurchmesser der Giessmaschine können zwischen der äusseren Spiralbuchse 76' und der Innenseite des Zylindermantels 5 ein oder mehrere solcher Ringe 78 mit je wenigstens einem Schlitz 82 vorgesehen sein.

## Patentansprüche

1. Giessrolle für eine Zweirollen-Giessmaschine, insbesondere zum Giessen eines Stahlbandes, mit einem Zylindermantel (2), der auf einer Achse (5) drehbar ist, wobei Andrückmittel (9, 9', 59, 69) zum Aufweiten des Zylindermantels vorgesehen sind,
**dadurch gekennzeichnet,**
**dass** zwischen dem Zylindermantel (2) und der Achse (5) mehrere Andrückmittel (9, 9', 59, 69) zum Aufweiten des Zylindermantels angeordnet sind, welche zwischen dem Zylindermantel (2) und der Achse (5) angeordnete Zwischenringe (7a, 7a', 7b, 7c, 7d) aufweisen, die mit Lagerungen für das Drehen des Zylindermantels (2) auf der feststehend angeordneten Achse (5) versehen sind, und dass wenigstens ein Tragring (4, 26) vorgesehen ist, der sowohl eine radiale als auch eine axiale Lagerung des Zylindermantels (2) auf der feststehenden Achse (5) ermöglicht und durch diesen die Kühlwasserzufuhr zum Zylindermantel (2) enthalten ist.

2. Giessrolle nach Anspruch 1,
**dadurch gekennzeichnet,**
**dass** die Andrückmittel (9) eine an der Innenwand (14) des Zylindermantels (2) angrenzende Druckkammer (10) aufweisen, welche über Zuführungskanäle (11, 12) in der Achse (5) und im Zwischenring (7a, 7a', 7b bzw. 7c) mit einem fluiden Druckmedium beaufschlagbar ist, so dass eine radiale oder eine schräg auf den Zylindermantel (2) wirkende Beaufschlagung durch diese Andrückmittel (9) erfolgt.

3. Giessrolle nach Anspruch 2,
**dadurch gekennzeichnet,**
**dass** die Druckkammer (10) ringförmig ist und den Zwischenring (7a, 7a', 7b bzw. 7c) vollumfänglich umfasst.

4. Giessrolle nach Anspruch 2 oder 3,
**dadurch gekennzeichnet,**
**dass** der Zwischenring (7a bzw. 7a') oder der Tragring (4) stirnseitig gegen die Innenwand (14) des Zylindermantels (2) anliegt und einen die Druckkammer (10) bildenden Hohlraum (16) aufweist, der stirnseitig durch eine im Hohlraum (16) gegen die Innenwand (14) des Zylindermantels (2) anliegend angeordnete, flexible Dichtung (17) begrenzt ist.

5. Giessrolle nach Anspruch 2 oder 3,
**dadurch gekennzeichnet,**
**dass** zwischen dem Zwischenring (7b) und der Innenwand (14) des Zylindermantels (2) ein umfänglicher Zwischenspalt (19) vorhanden ist, der durch eine die Druckkammer (10) begrenzende Metalldichtung (20) überbrückt ist.

6. Giessrolle nach Anspruch 2 oder 3,
**dadurch gekennzeichnet,**
**dass** der Zwischenring (7c) gegen die Innenwand (14) des Zylindermantels (2) anliegt und einen die Druckkammer (10) bildenden Hohlraum (16) aufweist, der stirnseitig von der Innenwand (14) des Zylindermantels (2) begrenzt ist und von einer oder mehreren im Zylindermantel (2) eingebauten Aussendichtungen (23) umschlossen ist.

7. Giessrolle nach einem oder mehreren der vorangehenden Ansprüche 2 bis 6,
**dadurch gekennzeichnet,**
**dass** der Zwischenring (7a, 7b bzw. 7c) auf der stehenden Achse (5) drehbar gelagert ist und mit einem oder mehreren den Übergang zwischen den Zuführungskanälen (11, 12) in der Achse (5) und im Zwischenring (7a, 7b bzw. 7c) abdichtenden Dichtungselementen (13) versehen ist.

8. Giessrolle nach Anspruch 1,
**dadurch gekennzeichnet,**
**dass** die Andrückmittel (9) durch einen an der Innenwand (14) des Zylindermantels (2) fest montierten, mitdrehenden Andrückring (24) gebildet sind, welcher in radialer Richtung durch induktives Aufheizen ausdehnbar ist.

9. Giessrolle mit mehreren Zwischenringen (7a, 7a', 7b, 7c, 7d) nach einem der vorangehenden Ansprüche 1 bis 8,
**dadurch gekennzeichnet,**
**dass** die Zwischenringe (7a, 7a', 7b, 7c, 7d) entlang der Achse (5) verstellbar sind.

10. Giessrolle mit mehreren Zwischenringen (7a, 7a', 7c, 7d) nach einem der vorangehenden Ansprüche 1 bis 9,
**dadurch gekennzeichnet,**
**dass** die Kontaktflächen der Zwischenringe (7a, 7a', 7c, 7d) mit der Innenwand (14) des Zylindermantels (2) auf einer gemeinsamen Fläche liegen.

11. Giessrolle nach einem der vorangehenden Ansprüche 1 bis 10,
**dadurch gekennzeichnet,**
**dass** die Zwischenringe (7a, 7a', 7b, 7c, 7d) drehfest mit dem Zylindermantel (2) verbunden sind.

12. Giessrolle nach einem der vorangehenden Ansprüche 1 bis 11,
**dadurch gekennzeichnet,**
**dass** die Zwischenringe (7a') ausserhalb einer zentralen Zentrierung angeordnet sind, welcher eine Zu- bzw. Abfuhr des Kühlmediums zugeordnet ist.

13. Giessrolle nach einem der vorangehenden Ansprüche 1 bis 12,
**dadurch gekennzeichnet,**
**dass** die Oberfläche des Zylindermantels durch ein Pulsieren des Druckmediums in wenigstens einem Zwischenring oder durch einen auf mindestens einem Zwischenring vorgesehenen Vibrator in Schwingungen versetzbar ist, so dass die Wärmeabfuhr beeinflusst bzw. erhöht werden kann.

14. Giessrolle nach Anspruch 1,
**dadurch gekennzeichnet,**
**dass** ein Andrückmittel (59, 69) vorgesehen ist, bei welchem zwischen der stehenden Achse (5) und dem Zylindermantel (2) wenigstens ein für die Aufweitung als Druckmittel dienender Spreizring (51, 71) und ein Rollenlager (57) angeordnet ist.

15. Giessrolle nach Anspruch 1,
**dadurch gekennzeichnet,**
**dass** das Rollenlager einen Innen- und Aussenring aufweist, von denen mindestens der eine als Spiralbuchse (56, 56', 76, 76') ausgebildet ist, wobei die sich bei einer Aufweitung entsprechend ausdehnende Spiralbuchse (56, 56', 76, 76') einen wendelförmigen Aufbau mit einer Achse koaxial zur derjenigen der Achse (5) hat.

16. Giessrolle nach Anspruch 14,
**dadurch gekennzeichnet,**
**dass** zwischen dem Spreizring (51, 71) und der Achse (5) eine an eine Druckmittelversorgung (54) angeschlossene Druckkammer (55) gebildet ist, und dass eine den Spreizring (51, 71) umfassende Spiralbuchse (56, 76), ein Rollenlager (57) und nochmals eine solche Spiralbuchse (56', 76') vorgesehen ist, zwischen letzterer und dem Zylindermantel (2) zusätzlich ein vorzugsweise mehrteiliger Ring (58) vorhanden ist.

## Claims

1. Casting roll for a twin-roll casting machine, especially for casting steel strip, with a cylinder sleeve (2), which can rotate on an axle (5), in which pressure means (9, 9', 59, 69) for expanding the cylinder sleeve are provided,
**characterised in that**
wherein several pressure means (9, 9', 59, 69) for expanding the cylinder sleeve are installed between the cylinder sleeve (2) and the axle (5), which have intermediate rings (7a, 7a', 7b, 7c, 7d) installed between the cylinder sleeve (2) and the axle (5), which are provided with bearings which allow the cylinder sleeve (2) to rotate on the stationary axle (5), and that at least one supporting ring (4, 26) is provided, which provides both radial and axial support of the cylinder sleeve (2) on the stationary axle (5) and contains the cooling water supply to the cylinder sleeve (2).

2. Casting roll in accordance with claim 1,
**characterized in that**
the pressure means (9) have a pressure chamber (10), which borders on the inside wall (14) of the cylinder sleeve (2) and can be pressurized with a fluid pressure medium through supply channels (11, 12) in the axle (5) and in the intermediate ring (7a, 7a', 7b or 7c), so that these pressure means (9) act radially or obliquely on the cylinder sleeve (2).

3. Casting roll in accordance with claim 2,
**characterized in that**
the pressure chamber (10) is annular and extends completely around the intermediate ring (7a, 7a', 7b or 7c).

4. Casting roll in accordance with claim 2 or 3,
**characterized in that**
the end face of the intermediate ring (7a or 7a') or the supporting ring (4) abuts the inside wall (14) of the cylinder sleeve (2), and that the intermediate ring or the supporting ring has a cavity (16), which forms the pressure chamber (10) and is bounded at its end face by a flexible seal (17), which is installed in the cavity (16) and rests against the inside wall (14) of the cylinder sleeve (2).

5. Casting roll in accordance with claim 2 or 3,
**characterized in that**
a circumferential intermediate gap (19) is present between the intermediate ring (7b) and the inside wall (14) of the cylinder sleeve (2) and is spanned by a metal seal (20) that bounds the pressure chamber (10).

6. Casting roll in accordance with claim 2 or 3,
**characterized in that**
the intermediate ring (7c) abuts the inside wall (14) of the cylinder sleeve (2) and has a cavity (16), which forms the pressure chamber (10), which is bounded at its end faces by the inside wall (14) of the cylinder sleeve (2), and is surrounded by one or more outer seals (23) installed in the cylinder sleeve (2).

7. Casting roll in accordance with one or more of the preceding claims 2 to 6,
**characterized in that**
the intermediate ring (7a, 7b, or 7c) is rotationally supported on the stationary axle (5) and is provided with one or more sealing elements (13) that seal the transition between the supply channels (11, 12) in the axle (5) and in the intermediate ring (7a, 7b, or 7c).

8. Casting roll in accordance with claim 1,
**characterized in that**
the pressure means (9) consist of a co-rotating pressure ring (24), which is mounted in a stationary way on the inside wall (14) of the cylinder sleeve (2) and can be expanded in the radial direction by inductive heating.

9. Casting roll with several intermediate rings (7a, 7a', 7b, 7c, 7d) in accordance with one of the preceding claims 1 to 8,
**characterized in that**
the intermediate rings (7a, 7a', 7b, 7c, 7d) can be moved along the axle (5).

10. Casting roll with several intermediate rings (7a, 7a', 7c, 7d) in accordance with one of the preceding claims 1 to 9,
**characterized in that**
the contact surfaces of the intermediate rings (7a, 7a', 7c, 7d) with the inside wall (14) of the cylinder sleeve (2) lie on a common surface.

11. Casting roll in accordance with one of the preceding claims 1 to 10,
**characterized in that**
the intermediate rings (7a, 7a', 7b, 7c, 7d) are non-rotatably joined with the cylinder sleeve (2).

12. Casting roll in accordance with one of the preceding claims 1 to 11,
**characterized in that**
the intermediate rings (7a') are installed outside a central centering, to which coolant supply and carry-away lines are assigned.

13. Casting roll in accordance with one of the preceding claims 1 to 12,
**characterized in that**
the surface of the cylinder sleeve can be caused to vibrate by pulsation of the pressure medium in at least one intermediate ring or by a vibrator installed on at least one intermediate ring, so that heat dissipation can be influenced or.increased.

14. Casting roll in accordance with claim 1,
**characterized in that**
pressure means (59, 69) are provided, in which at least one expansion ring (51, 71), which serves as the pressure means for the expansion, and a roller bearing (57) are installed between the stationary axle (5) and the cylinder sleeve (2).

15. Casting roll in accordance with claim 1,
**characterized in that**
the roller bearing has an inner and an outer ring, at least one of which is designed as a spiral bush (56, 56', 76, 76'), such that the spiral bush (56, 56', 76, 76') has a spiral design with an axis coaxial to the axis of the axle (5) and during an expansion expands accordingly.

16. Casting roll in accordance with claim 14,
**characterized in that**
a pressure chamber (55), which is connected to a pressure medium supply (54), is formed between the expansion ring (51, 71) and the axle (5), that a spiral bush (56, 76), which surrounds the expansion ring (51, 71), a roller bearing (57), and another spiral bush (56', 76') are provided, and that, in addition, a preferably multi-segment ring (58) is present between the spiral bush (56', 76') and the cylinder sleeve (2).

## Revendications

1. Rouleau de coulée pour une machine de coulée à deux rouleaux, notamment pour couler un feuillard d'acier comprenant une surface latérale (2) cylindrique qui peut tourner sur un axe (5), des moyens (9, 9', 59, 69) de serrage étant prévus pour élargir la surface latérale cylindrique,
**caractérisé**
**en ce qu'**il est disposé entre la surface (2) latérale cylindrique et l'axe (5) plusieurs moyens (9, 9', 59, 69) de serrage pour élargir la surface latérale cylindrique, qui ont des anneaux (7a, 7a', 7b, 7c, 7d) intermédiaires qui sont disposés entre la surface (2) latérale cylindrique et l'axe (5) et qui sont munis de paliers pour la rotation de la surface (2) latérale cylindrique sur l'axe (5) monté fixe, et en ce qu'il est prévu au moins un anneau (4, 26) de support qui permet de supporter tant radialement qu'axialement la surface (2) latérale cylindrique sur l'axe (5) fixe, et l'apport d'eau de refroidissement à la surface (2) latérale cylindrique passe par cet axe.

2. Rouleau de coulée suivant la revendication 1,
**caractérisé**
**en ce que** les moyens (9) de serrage ont une chambre (10) de pression voisine de la paroi (14) intérieure de la surface (2) latérale cylindrique et pouvant être alimentée en un milieu fluide sous pression par des canaux (11, 12) d'apport dans l'axe (5) et dans l'anneau (7a, 7a', 7b ou 7c) intermédiaire, de manière à effectuer par ces moyens (9) de serrage une alimentation radiale ou agissant en oblique sur la surface (2) latérale cylindrique.

3. Rouleau de coulée suivant la revendication 2,
**caractérisé**
**en ce que** la chambre (10) de pression est annulaire et comprend sur tout le tour l'anneau (7a, 7a', 7b ou 7c) intermédiaire.

4. Rouleau de coulée suivant la revendication 2 ou 3,
**caractérisé**
**en ce que** l'anneau (7a ou 7a') intermédiaire ou l'anneau (4) de support s'appliquent du côté frontal sur la paroi (14) intérieure de la surface (2) latérale cylindrique et ont une cavité (7) formant une chambre (10) de pression qui est délimitée du côté frontal par une garniture (17) d'étanchéité souple disposée dans la cavité (7) en s'appliquant à la paroi (14) intérieure de la surface (2) latérale cylindrique.

5. Rouleau de coulée suivant la revendication 2 ou 3,
**caractérisé**
**en ce qu'**il y a entre l'anneau (7b) intermédiaire et la paroi (14) intérieure de la surface (2) latérale cylindrique un intervalle (19) intermédiaire faisant le tour qui est enjambé par une garniture (20) d'étanchéité métallique délimitant la chambre (10) de pression.

6. Rouleau de coulée suivant la revendication 2 ou 3,
**caractérisé**
**en ce que** l'anneau (7c) intermédiaire s'applique à la paroi (14) intérieure de la surface (2) latérale cylindrique et a une cavité (16) qui forme la chambre (10) de pression, qui est voisine du côté frontal de la paroi (14) intérieure de la surface (2) latérale cylindrique et qui est entourée d'une ou de plusieurs garnitures (23) d'étanchéité extérieures rapportées dans la surface (2) latérale cylindrique.

7. Rouleau de coulée suivant l'une ou plusieurs des revendications 2 à 6 précédentes,
**caractérisé**
**en ce que** l'anneau (7a, 7b ou 7c) intermédiaire est monté tournant sur l'axe (5) fixe et est muni d'un ou de plusieurs éléments (13) d'étanchéité rendant étanche la transition entre les canaux (11, 12) d'apport dans l'axe (5) et dans l'anneau (7a, 7b ou 7c) intermédiaire.

8. Rouleau de coulée suivant la revendication 1,
**caractérisé**
**en ce que** les moyens (9) de serrage sont formés par un anneau (24) de serrage qui est monté fixe sur la paroi (14) intérieure de la surface (2) latérale cylindrique qui tourne conjointement et qui peut se dilater dans la direction radiale par chauffage par induction.

9. Rouleau de coulée ayant plusieurs anneaux (7a, 7a', 7b, 7c, 7d) intermédiaires suivant l'une des revendications 1 à 8 précédentes,
**caractérisé**
**en ce que** les anneaux (7a, 7a', 7b, 7c, 7d) intermédiaires peuvent être déplacés le long de l'axe (5).

10. Rouleau de coulée ayant plusieurs anneaux (7a, 7a', 7c, 7d) intermédiaires suivant l'une des revendications 1 à 9 précédentes,
**caractérisé**
**en ce que** les surfaces de contact des anneaux (7a, 7a', 7c, 7d) intermédiaires sont dans un plan commun avec la paroi (14) intérieure de la surface (2) latérale cylindrique.

11. Rouleau de coulée suivant l'une des revendications 1 à 10 précédentes,
**caractérisé**
**en ce que** les anneaux (7a, 7a', 7b, 7c, 7d) intermédiaires sont solidaires en rotation de la surface (2) latérale cylindrique.

12. Rouleau de coulée suivant l'une des revendications 1 à 11 précédentes,
**caractérisé**
**en ce que** les anneaux (7a') intermédiaires sont disposés en dehors d'un centrage central qui est associé à un apport ou à une évacuation du fluide de refroidissement.

13. Rouleau de coulée suivant l'une des revendications 1 à 12 précédentes,
**caractérisé**
**en ce que** la partie superficielle de la surface latérale cylindrique peut être mise en oscillation par une pulsation du fluide comprimé dans au moins un anneau intermédiaire ou par un vibreur prévu sur au moins un anneau intermédiaire, de manière à pouvoir influencer ou augmenter l'évacuation de chaleur.

14. Rouleau de coulée suivant la revendication 1,
**caractérisé**
**en ce qu'**il est prévu un moyen (59, 69) de serrage dans lequel il est disposé entre l'axe (5) fixe et la surface (2) latérale cylindrique au moins un anneau (51, 71) d'écartement servant de moyen d'application d'une pression pour l'élargissement et un palier (57) de rouleau.

15. Rouleau de coulée suivant la revendication 1,
**caractérisé**
**en ce que** le palier de rouleau a un anneau intérieur et un anneau extérieur dont l'un au moins est constitué sous la forme d'un manchon (56, 56', 76, 76') spirale, le manchon (56, 56', 76, 76') spirale se dilatant d'une manière correspondante lors de l'élargissement ayant une structure en forme d'hélice ayant un axe coaxial à celui de l'axe (5).

16. Rouleau de coulée suivant la revendication 14,
**caractérisé**
**en ce qu'**il est formé, entre l'anneau (51, 71) d'écartement et l'axe (5), une chambre (55) de pression raccordée à une alimentation (54) en fluide sous pression, et en ce qu'il est prévu un manchon (56, 76) en spirale entourant l'anneau (51, 71) d'écartement, un palier (57) de rouleau et encore une fois un manchon (56', 76') en spirale, un anneau (58) de préférence en plusieurs parties étant prévu supplémentairement entre le dernier manchon et la surface (2) latérale cylindrique.
